# EUROPEAN PATENT SPECIFICATION

(11) **EP 3 157 971 B1**
(45) Date of publication and mention of the grant of the patent: **09.08.2023**
(21) Application number: 14895510.7
(22) Date of filing: 23.06.2014
(51) Int. Cl.: C08G 18/67, C08G 18/44, C08G 18/10

(54) **URETHANE ACRYLATE POLYMERS WITH UNIQUE PHYSICAL PROPERTIES**
URETHANACRYLATPOLYMERE MIT EINZIGARTIGEN PHYSISCHEN EIGENSCHAFTEN
POLYMÈRES D'ACRYLATE ET D'URÉTHANE AUX PROPRIÉTÉS PHYSIQUES UNIQUES

(43) Date of publication of application: 26.04.2017
(73) Proprietor: Arkema France, 92700 Colombes (FR)
(72) Inventor: AMIN, Mohammad Zahidul, Yokohama-shi Kanagawa 240-0005 (JP); SUGIMOTO, Toshiya, Yokohama-shi Kanagawa 240-0005 (JP); FAN, Mingxin, Science City Guangzhou 510663 (CN)
(74) Representative: Arkema Patent
(86) International application number: PCT/JP2014/067848
(87) International publication number: WO 2015/198493

(56) References cited:
- JP-A- H0 431 430
- JP-A- 2012 184 383
- JP-A- 2012 184 385
- JP-A- 2013 023 521
- JP-A- 2013 249 455
- US-A- 4 255 243

## Description

### [Technical Field]

The present invention relates to a urethane acrylate oligomer or polymer including at least one of a co-polymeric polycarbonate unit and a co-reacted urethane acrylate unit. The present invention also relates to a curable composition including at least one oligomer above, to a manufacturing process for the urethane acrylate oligomer, and to a cured product made from the urethane acrylate oligomer or the curable composition.

### [Background]

Various radiation curable coating polymers, such as epoxy acrylates, polyester acrylates, and urethane acrylates, have been developed in the art. Such conventional acrylate polymers are commercially available.

Acrylate polymers have advantages of having very low volatile organic compounds (VOC) as well as high productivity. Ultraviolet (UV) light and electron beam (EB) are the most typical forms of radiation which are used to generate free radicals which initiate the polymerization or cure.

Urethane acrylate polymer is one of the radiation curable coating polymers. Urethane acrylates are widely used in ultraviolet (UV) cure industries, and they represent a class of resin materials for coatings and adhesives.

Some polycarbonate-containing acrylate-containing polymers having a single kind of homopolycarbonate moiety have been proposed in the art.

Patent Document 1 (Yamamoto et al., US5178952A) discloses a radiation curable resin which is a reaction product of a polyester polyol and/or polycarbonate polyol, a diisocyanate, and a polyfunctional (meth)acrylate containing a hydroxyl group therein. Only one homopolycarbonate polyol is used in the conventional process of Document 1.

Patent Document 2 (Fan et al., US6451958B1) discloses a radiation curable acrylate-terminated polymer having a single kind of homopolycarbonate moiety that aims to improve adhesion and impact strength properties.

Patent Document 3 (Tanaka et al., JP2001323042A) discloses a segmented polyurethane made from (A) a polycarbonate diol prepared from an aliphatic hydrocarbon diol containing 1,12-dodecane diol and a carbonate compound, (B) a chain expander, and (C) a diisocyanate. The conventional polyurethane includes a sole kind of homopolycarbonate diol.

Patent Document 4 (Tanaka et al., JP5347958B2) discloses a photo-curable composition prepared by a transesterification of a sole polycarbonate diol, one or more (meth)acrylate ester(s), and a silane compound. The conventional composition is characterized in including cage-like silsesquioxane component to have sufficient surface hardness. Patent Document 5 (US 4 255 243 A), Patent Document 6 (JP 2012-184385 A), Patent Document 7 (JP 2012-184383 A), Patent Document 8 (JP 2013-249455 A), Patent Document 9 (JP 2013-023521 A) and Patent Document 10 (JP H04-31430 A) all disclose a polyurethane compound obtained by reacting a polycarbonate diol, a polyisocyanate and a (meth)acrylate compound which has a hydroxyl group.

### [Citation List]

### [Patent Literature]

[Patent Document 1] U.S. Pat. No 5,178,952
[Patent Document 2] U.S. Pat. No 6,451,958
[Patent Document 3] Japanese laid-open Pub. No 2001-323042
[Patent Document 4] Japanese Pat. No. 5347958
[Patent Document 5] U.S. Pat. No 4,255,243
[Patent Document 6] Japanese laid-open Pub. No 2012-184385
[Patent Document 7] Japanese laid-open Pub. No 2012-184383
[Patent Document 8] Japanese laid-open Pub. No 2013-249455
[Patent Document 9] Japanese laid-open Pub. No 2013-023521
[Patent Document 10] Japanese application. No H04-31430

### [Summary of Invention]

### [Technical Problem]

The conventional urethane acrylates oligomers or polymers have certain drawbacks. Urethane acrylates typically have a limited viscosity and low molecular weight, which result in good hardness, but lack flexibility or toughness. It has been very difficult and contradictory to give urethane acrylates both enough hardness and elongation.

The conventional urethane acrylates are also silent on any self healing properties when cured.

None of the prior art provides balanced properties of elongation and abrasion resistance along with good self healing properties.

### [Solution to Problem]

The present inventors have designed and developed a novel curable polymer which have excellent elongation and abrasion resistance to complete the present invention.

In an embodiment, the present invention provides a urethane-acrylated curable polymer, comprising a reaction product of the ingredients including:
[i] a first co-polymeric polycarbonate polyol; and
[ii] an organic diisocyanate; and
[iii] a hydroxy-functional acrylate or methacrylate of general formula

   (Acr)_{y}-(A)-OH

   where Acr is an acrylate or methacrylate group, A is the residue of a polyol A(OH)_{y+1} with y being an integer ranging from 1 to 5, preferably A is selected from C₂ to C₁₈ alkyl and C₂ to C₁₈ alkyl that may be modified by at least one unit of a cyclic ester in particular caprolactone or A is C₂ to C₁₈ alkoxylated alkyl, with alkoxy being in C₂ to C₄, and preferably the acrylate or methacrylate having a functionality in acrylate or methacrylate groups ranging from 1 to 5,
[iv] a second co-polymeric polycarbonate polyol, and

wherein the polycarbonate polyols are linked to the diisocyanate via a urethane linkage, and
wherein the diisocyanate is linked to the alkyl moiety of the hydroxy-functional acrylate or methacrylate via a urethane linkage.

In another embodiment, the present invention provides a curable composition including the polymer above. The present invention may also provide a cured product prepared by curing the polymer above, or an article comprising a substrate coated by the cured product.

In still another embodiment, the present invention provides a process for preparing the curable polymer above, comprising the steps of:
a) reacting one of said hydroxy-functional acrylate or methacrylate according to iii) and the said first polycarbonate polyol according to i) with a molar excess of said isocyanate according to ii) by progressive addition of said hydroxy-functional acrylate or methacrylate according to iii) or the first polycarbonate polyol i) in said isocyanate ii), in the presence of an urethane reaction catalyst and of a polymerization inhibitor, to form an isocyanate adduct; and then
b) reacting the resultant isocyanate adduct of step a) with the other of iii) and i) by progressive addition of the other of iii) of i) into said adduct to the resulting reactive mixture to obtain the said polymer,
wherein the progressive addition of the first polycarbonate polyol according to i) is followed by a successive step with said second polycarbonate polyol according to iv) by progressive addition of iv). In one aspect, both reaction steps a) and b) may be in bulk and in the absence of any solvent.

### [Advantageous Effects of Invention]

The novel curable polymer has well-balanced physical properties between excellent elongation and good abrasion resistance and tensile strength. The balanced properties are superior to the conventional product in the art. The present polymer may be cured by a radiation. The cured product can provide excellent self healing properties.

### [Brief Description of Drawings]

Fig. 1 illustrates a chart of gel permeation chromatography (GPC) obtained from the present polymer according to Example 2. The chart includes three curves that correspond to synthetic steps in the protocol of the Example.
Fig. 2 illustrates a GPC chart obtained from the present polymer according to Example 4. The chart includes three curves that correspond to synthetic steps in the protocol of the Example.
Fig. 3 illustrates a GPC chart obtained from the present polymer according to Example 5. The chart includes two curves that correspond to synthetic steps in the protocol of the Example.
Fig. 4 illustrates a GPC chart obtained from the present polymer according to Example 6. The chart includes three curves that correspond to synthetic steps in the protocol of the Example.
Fig. 5 illustrates GPC charts obtained from three conventional polymers according to comparative example 1 to 3.
Fig. 6 shows photographs representing four levels for evaluating the abrasion resistance test (written in 'Examples' section) to easily compare each other. The four levels are "Lot of Scratch", "Little Scratch", "Almost No Scratch", and "No Scratch"; the photographs were taken from the rubbed samples according to comparative example 1, Example 3, Example 5, and Example 2, respectively. The photographs are separately shown again below in an enlarged size.
Fig. 7 shows an enlarged photograph of a coating made from the present polymer according to Example 2, which was subjected to the abrasion resistance test. The result represents Level 4, "No Scratch".
Fig. 8 shows an enlarged photograph of a coating made from the present polymer according to Example 3, which was subjected to the abrasion resistance test. The result represents Level 2, "Little Scratch".
Fig. 9 shows an enlarged photograph of a coating made from the present polymer according to Example 5, which was subjected to the abrasion resistance test. The result represents Level 3, "Almost No Scratch".
Fig. 10 shows an enlarged photograph of a coating made from a comparative polymer according to comparative example 1, which was subjected to the abrasion resistance test. The result represents Level 1, "Lot of Scratch".
Fig. 11 is a photograph to exemplify how to make scratches on a coated surface in the self-healing test. The initial condition works as the reference of the self-healing test.
Fig. 12 shows photographs representing four levels for evaluating the self-healing test (written in 'Examples' section) to easily compare each other. The four levels are "No Restoration", "Little Restored", "Almost Restored", and "Completely Restored"; the photographs were taken from the rubbed samples according to comparative example 3, Example 5, Example 1, and Example 4, respectively. The photographs are separately shown again below in an enlarged size.
Fig. 13 is an enlarged photograph of a coating made from the present polymer according to Example 1, which was subjected to the self-healing test. The result represents Level 3, "Almost Restored".
Fig. 14 is an enlarged photograph of a coating made from the present polymer according to Example 4, which was subjected to the self-healing test. The result represents Level 4, "Completely Restored".
Fig. 15 is an enlarged photograph of a coating made from the present polymer according to Example 5, which was subjected to the self-healing test. The result represents Level 2, "Little Restored".
Fig. 16 is an enlarged photograph of a coating made from a conventional polymer according to comparative example 3, which was subjected to the self-healing test. The result represents Level 1, "No Restoration".

### [Description of Embodiments]

### Polycarbonate Polyols

In the present specification, the term "polycarbonate polyol" or "PC polyol" means a polycarbonate (PC) polyol having an aliphatic or cycloaliphatic or aromatic hydrocarbyl chain. The chain may be alkyl group, such as C₁ to C₁₈ alkyl, preferably C₂ to C₁₈ alkyl, more preferably C₂ to C₁₂ alkyl, still more preferably C₂ to C₆ alkyl; cycloaliphatic group such as C₆ to C₁₈ cycloaliphatic group which may be substituted on the aliphatic chain, preferably C₆ to C₁₂ cycloaliphatic group; aromatic group such as C₆ to C₁₈ aromatic group. In an embodiment of the present invention, the PC polyol may be modified with a cyclic ester such as lactide, glycolide and caprolactone. In an aspect of the embodiment, diol may be preferred among the polyols.

In one aspect, the aliphatic, cycloaliphatic or aromatic polycarbonate polyol may be PC diol which may be based on ethylene glycol, propylene glycol, butanediol, pentanediol, hexanediol, heptanediol, octanediol, nonanediol, decanediol, cyclopropanediol, cyclobutanediol, cyclopentanediol, cyclohexanediol, cycloheptanediol, cyclooctanediol, cyclopropanediethanol, cyclobutanedimethanol, cyclopentanediethanol, cyclohexanediethanol, cycloheptanediethanol, cyclooctanediethanol, cyclopentanediethanol, cyclohexanediethanol, cycloheptanediethanol, cyclooctanediethanol, cyclopropanediethanol, cyclobutanediethanol, cyclopentanediethanol, cyclohexanediethanol, cycloheptanediethanol, cyclooctanediethanol, cyclopentanediethanol, cyclohexanediethanol, cycloheptanediethanol, cyclooctanediethanol, or ethoxylated bisphenol A, that may be unbranched or branched.

The term "co-polymeric polycarbonate polyol" or "co-polymeric PC polyol" means a polycarbonate (PC) polyol prepared by a copolymerization between two or more kinds of monomers such as those exemplified above. The "co-polymeric PC polyols" generally exclude homopolymeric PC polyols. The present curable polymer has a chemical structure derived from a co-polymeric PC polyol. The co-polymeric PC polyol may include, but not limited to, a poly C₂ to C₁₈ diol carbonate modified with a cyclic ester such as lactide, glycolide and caprolactone, and a co-polymerized carbonate of two or more poly C₂ to C₁₈ alkylene, cycloalkylene, or cycloalkylalkylene diol carbonate. In one preferred embodiment, the co-polymeric PC polyol may include caprolactone co-polymerized polyalkylenediol carbonate such as caprolactone co-polymerized polyhexanediol carbonate; or a co-polymerized carbonate of two polyalkyl, polycycloalkyl or polycycloalkylalkyl polyols, such as a co-polymerized carbonate of polycyclohexane dimethanol and polyhexane diol.

The present polymer includes moieties derived from more than one kinds of co-polymeric polycarbonate polyol(s) and optionally one or more kinds of homopolymeric polycarbonate polyol(s).

The co-polymeric polycarbonate polyols may have the number average molecular weight (Mn) of 500 to 3,000, preferably 500 to 2,000, and more preferably 500 to 1,000. The number average molecular weight is calculated from OH value determined by KOH titration.

In an embodiment, the present polymer may have formula (I)

(Acr)_{y}(A)(Q)(PC)[(Q)(PC)]ₓ(Q)(A)(Acr)_{y} (I)

in which PC is the residue of the polycarbonate diols above.

### Urethane Structures

Urethane compounds have a skeleton having a urethane linkage, such as -NH-C(O)O-. In the present specification, the term "co-reacted urethane" or "co-reacted urethane acrylate (UA)" means a urethane or urethane acrylate compound comprising two or more kinds of polycarbonate moieties. In an embodiment, the present curable polymer may have a chemical structure of a co-reacted urethane. In another embodiment, the present curable polymer may have a chemical structure including a co-reacted urethane moiety and the residue of a co-polymerized polycarbonate polyol.

The polymer containing moieties derived from two or more kinds of co-polymeric polycarbonate polyols is considered as to have a "co-reacted UA" structure. The molar ratio among the two of two or more PC polyols that are used for preparing a co-reacted UA may be in the range of 100:1 to 1:100, preferably 10:1 to 1:10, more preferably 2:1 to 1:2, still more preferably 1.5:1 to 1:1.5. The ratio may be determined from physical and/or chemical properties of the ingredients, e.g. viscosity, T_{g}, transparency, and hardness. In one embodiment, the ratio may be adjusted such that the overall viscosity is well-balanced, since urethane component generally has higher viscosity.

Note that the terms of "co-reacted" and "co-polymeric" basically excludes a non-substantial use of a plurality of reactants of the same class, e.g., those inevitably incorporated in a composition during a manufacturing process. In general, the phrase "co-reacted" or "co-polymeric" do not mean an embodiment in which the second or later reactant(s) are in trace amount. For instance, a "co-reacted" UA would not be prepared from a substantial amount of first PC polyol and a non-substantial or trace amount of second PC polyol.

### Isocyanates

The present polymer includes a moiety derived from an isocyanate compound. In an embodiment, the present polymer may have formula (I) above, in which Q is the residue of the isocyanate. The isocyanate may connect with A and PC via a urethane linkage.

In an embodiment, the isocyanate or polyisocyanate may have 6 to 18 carbon atoms, preferably 6 to 12 carbon atoms, except for those contained in the NCO groups. The lower number of carbon atoms, C₂ to C₅, may not be preferred since low-C isocyanate compounds are generally too volatile for any practical use, and would exert toxicity.

An isocyanate or polyisocyanate used in an embodiment may be aliphatic, cycloaliphatic or aromatic with various number of isocyanate groups, preferably two or more isocyanate groups per molecule. The isocyanate compounds may include, but not limited to, isophorone diisocyanate (IPDI), toluene diisocyanate (TDI), dicyclohexylmethane 4,4'-diisocyanate (MDI), hexamethylene diisocyanate, 4,4'-methylenebis(phenylisocyanate), xylenediisocyanate, octadecyl isocyanate, 1,5-naphthylene diisocyanate, dianisidine diisocyanate, and polymethylene polyphenylisocyanates. The polyisocyanates may be dimers, trimers, and polymers in nature such as. allophanates, isocyanurates, uretdiones, biurets, of hexamethylene diisocyanate and isophorone diisocyanate.

### Acrylates or Methacrylates

The present polymer may include a portion or the residue derived from a hydroxy-functional acrylate or methacrylate, such as hydroxyalkyl acrylate or hydroxyalkyl methacrylate. In an embodiment, the portion made from (meth)acrylate may be a capping or terminal group of the polymer having the formula of (Acr)_{y}(A), where Acr is an acrylate or methacrylate moiety, and A may be an alkyl moiety A having 2 to 18 carbon atoms, preferably 2 to 12 carbon atoms, more preferably 6 to 12 carbon atoms. A may also be modified by at least one unit of a cyclic ester such as caprolactone. In one aspect, A may be an alkoxylated alkyl having 2 to 18 carbon atoms, in which the alkoxy moiety has 2 to 4 carbon atoms. The number of y may be an integer from 1 to 5. In other words, "A" may be represented as the residue of a polyol A(OH)_{y+1} with y being an integer ranging from 1 to 5.

Hydroxyl containing (meth)acrylic esters may be monoesters or multi-functional esters, such as pentaerythitol triacrylate, trimethyolpropane diacrylate, hydroxyethyl acrylate, hydroxypropyl acrylate, hydroxypropyl methacrylate, hydroxyethyl methacrylate, and caprolactone-modified hydroxyl functional (meth)acrylate.

The present polymer may be prepared by a condensation reaction with or without catalysts. Catalyzed reactions are preferred due to the short reaction time and less side products. The catalysts may include, but not limited to, amines and tin-based catalysts, such as dibutyltin dilaurate, 1,4-diazabicyclo[2.2.2]-octane (DABCO), 1,8-diazabicyclo-[5.4.0]-undec-7-ene (DBU), N,N-dimethylcyclohexylamine (DMCA), tetramethyltin, tetrabutyltin, tetraoctyltin, tributyltin chloride, dibutyltin dichloride, dibutyltin oxide, dibutyltin diacetate, butyltin trichloride, dioctyltin dichloride, dioctyltin oxide, dioctyltin dilaurate, dioctyltin diacetate. Other metal-based catalysts containing zinc, iron, bismuth, or zirconium may be also used.

In one aspect, the present polymer may be prepared by a process comprising the acts of reacting the hydroxyalkyl acrylate or hydroxyalkyl methacrylate above with a molar excess of isocyanate to form an isocyanate adduct; and then reacting the resultant isocyanate adduct with two or more of the co-polymeric polycarbonate polyol(s) above. In another aspect, the present polymer may be prepared by a process comprising the acts of reacting two or more of the co-polymeric polycarbonate polyol(s) above with a molar excess of isocyanate to form an isocyanate adduct; and then reacting the resultant isocyanate adduct with the hydroxyalkyl acrylate or hydroxyalkyl methacrylate above.

In the present specification, a gel permeation chromatography (GPC) chart may be used in order to verify a chain extension of a resulted urethane acrylated polymer via values of weight average molecular weight (Mw). The GPC charts are generally estimated by the value in terms of polystyrene.

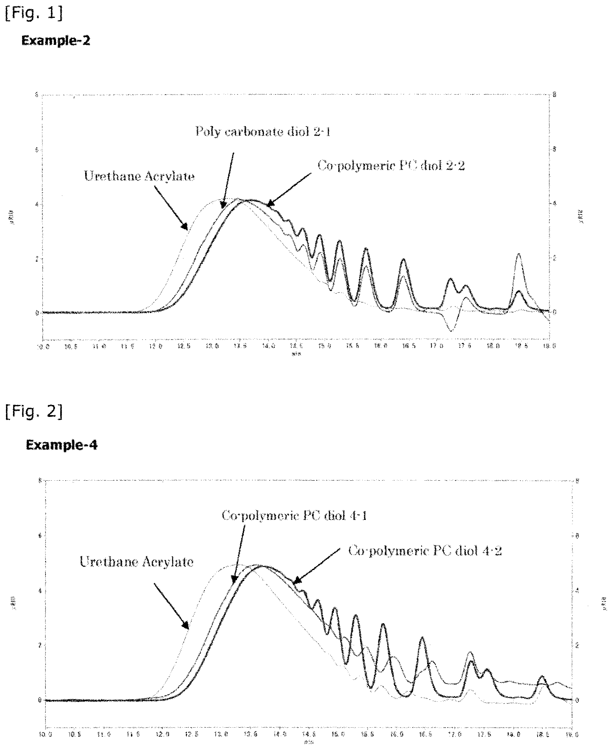

For instance, the present polymers may be verified by following a shift in time elution representing the increase of molecular weight step after step up to the final polymer, as shown in Figs. 1 to 4. The figures illustrate that the peaks were shifted to heavy molecular weight (left to right) step by step by additions of ingredients/components. Further details will be described below.

The present polymer may be cured by a radiation such as a light emitted from a UV lamp or a light emitting diode (LED) lamp, electron beam (EB), and laser beam. In another embodiment, the present polymer may be a peroxide-curable (P-curable) composition or a dual (radiation- and P-) curable composition. In still other embodiment, the present polymer may be a M-curable composition which may be cured via the Michael addition with polyamines, in the case that a hydroxyalkyl acrylate is used as the acrylate.

In an embodiment, the present polymer may work as a coating composition and may be applied onto a substrate and then cured to form a coating. The substrate may include, but not limited to, a plastic such as polyvinyl chloride, polycarbonate, polystyrene and polyester. The coating composition may include, but not limited to, paints, inks, adhesives, or gel coats.

In an embodiment, the present polymer may be a molding composition or a composite material composition, or a composition for 3D articles to be subjected under successive layer coating and curing procedures. The curable composition may be cured by the known means such as UV or LED light and electron or laser beam, as shown above, with reduced shrinkage. The 3D articles may be effectively output from any kinds of 3D printers using some photo-emitting devices (e.g., photo-molding type, stereo lithography type, ink-jet type, selective laser sintering type, and projection type), since a curable raw material, including the present polymer, is less shrank during the molding process and exerts good formability. Without wishing to be bound by any theory, it is believed that the combined, well-balanced physical/chemical prosperities of the present polymer would be convenient for 3D printing.

### [Examples]

The following non-limiting examples illustrate a few embodiments of the invention.

### Example 1: Preparation of Aliphatic Polycarbonate Urethane Acrylate (not according to the invention)

27.0 grams of isophorone diisocyanate, 0.1 gram of 4-methoxyphenol, 0.1 gram of dibutyltin dilaurate were charged into a 1000 mL reactor. 14.0 grams of 2-hydroxyethyl acrylate (Mn: 116) was added drop wise with dry air sparge and reacted for 2 hours at 50 to 60°C. It was then heated to 75°C and 33.0 grams of polycarbonate diol (PC1-1: polyhexanediol carbonate; Mn: 1000; OH value: 110±10 KOH mg/g) were added in the mixture. After the completion of PC1-1 addition, and 25.0 grams of polycarbonate diol (c-PC1-2: caprolactone co-polymerized polyhexanediol carbonate; Mn: 1000; OH value: 110±10 KOH mg/g) were added in the mixture. The final resin was obtained as clear viscous material with viscosity of 50000 cps at 60°C.

### Example 2: Preparation of Aliphatic Polycarbonate Urethane Acrylate (not according to the invention)

22.0 grams of isophorone diisocyanate, 0.1 gram of 4-methoxyphenol, 0.1 gram of dibutyltin dilaurate were charged into a 1000 mL reactor. 34.0 grams of caprolactone-modified hydroxyhexyl acrylate (Mn: 344; OH value: 165±10 KOH mg/g) was added drop wise with dry air sparge and reacted for 2 hours at 50 to 60°C. It was then heated to 75°C and 21.0 grams of polycarbonate diol (PC2-1: polyhexanediol carbonate; Mn: 1000; OH value: 110±10 KOH mg/g) were added in the mixture. After the completion of PC2-1 addition, and 23.0 grams of polycarbonate diol (c-PC2-2: co-polymerized carbonate of polycyclohexane dimethanol and polyhexane diol; Mn 900; OH value: 125±10 KOH mg/g) were added in the mixture. The final resin was obtained as clear viscous material with viscosity of 30000 cps at 60°C.

The intermediate or final resin was subjected to gel permeation chromatography (GPC) for three times, the value in terms of polystyrene. The measurement conditions of GPC are given below.
Model: Hitachi High-Technologies Corporation made by high-performance liquid chromatogram Lachrom Elite
Column: KF-804 and Co. SHODEX KF-801, KF-803 Showa Denko
Eluent: THF
Flow rate: 0.45 mL/min
Detection: RI (differential refractometer)

The resulted GPC chart is shown in Fig. 1. The addition of the excess diisocyanate to the acrylate produced the curve labeled with "Urethane Acrylate", having the left most broad peak. The addition of "PC2-1" made the curve labeled with "Poly carbonate diol 2-1" which was shifted toward right direction on the time axis; the change means that molecular weight was increased by the reaction. The small sharp peaks correspond to chain extensions. Then the addition of "c-PC2-2" produced the final polymer which correspond to the last curve labeled with "Co-polymeric PC diol 2-2" which was further shifted to heavy molecular weight. Comparing the curves, the increase in molecular weight in the GPC diagram shall confirm the co-reaction of all components with a significant chain extension.

### Example 3: Preparation of Aliphatic Polycarbonate Urethane Acrylate (not according to the invention)

31.0 grams of isophorone diisocyanate, 0.1 gram of 4-methoxyphenol, 0.1 gram of dibutyltin dilaurate were charged into a 1000 mL reactor. 27.0 grams of 4-hydroxybutyl acrylate was added drop wise with dry air sparge and reacted for 2 hours at 50 to 60° C. It was then heated to 75°C and 42.0 grams of polycarbonate diol (c-PC3: co-polymerized carbonate of polycyclohexane dimethanol and polyhexane diol; Mn: 900; OH value: 125±10 KOH mg/g) were added in the mixture and reacted for 2 hours at 90°C. The final resin was obtained as clear viscous material with viscosity of 23000 cps at 60°C.

### Example 4: Preparation of Aliphatic Polycarbonate Urethane Acrylate

18.0 grams of toluene diisocyanate, 0.1 gram of 4-methoxyphenol, 0.1 gram of dibutyltin dilaurate were charged into a 1000 mL reactor. 36.0 grams of caprolactone-modified hydroxyhexyl acrylate was added drop wise with dry air sparge and reacted for 2 hours at 50 to 60°C. It was then heated to 75°C and 22.0 grams of polycarbonate diol (c-PC4-1: caprolactone co-polymerized polyhexanediol carbonate; Mn: 1000; OH value: 110±10 KOH mg/g) were added in the mixture. After the completion of c-PC4-1 addition, and 23.5 grams of polycarbonate diol (c-PC4-2: co-polymerized carbonate of polycyclohexane dimethanol and polyhexane diol; Mn: 900; OH value: 125±10 KOH mg/g) were added in the mixture. The final resin was obtained as clear viscous material with viscosity of 30000 cps at 60°C.

The intermediate/final resin was subjected to the GPC measurement for three times, as the same as Example 2 above. The resulted GPC chart is shown in Fig. 2. Fig. 2 has similar characteristics to Fig. 1, and also confirms the increase of molecular weight, and the co-reaction of all components with a significant chain extension was sufficiently carried out.

### Example 5: Preparation of Aliphatic Polycarbonate Urethane Acrylate (not according to the invention)

24.5 grams of dicyclohexylmethane 4,4-diisocyanate, 0.1 gram of 4-methoxyphenol, 0.1 gram of dibutyltin dilaurate were charged into a 1000 mL reactor. 32.0 grams of caprolactone-modified hydroxyhexyl acrylate (Mn: 344; OH value: 165±10 KOH mg/g) was added drop wise with dry air sparge and reacted for 2 hours at 50 to 60°C. It was then heated to 75°C and 43.0 grams of polycarbonate diol (c-PC5: caprolactone co-polymerized polyhexanediol carbonate; Mn: 1000; OH value: 110±10 KOH mg/g) were added in the mixture and reacted for 2 hours at 90°C. The final resin was obtained as clear viscous material with viscosity of 60000 cps at 60°C.

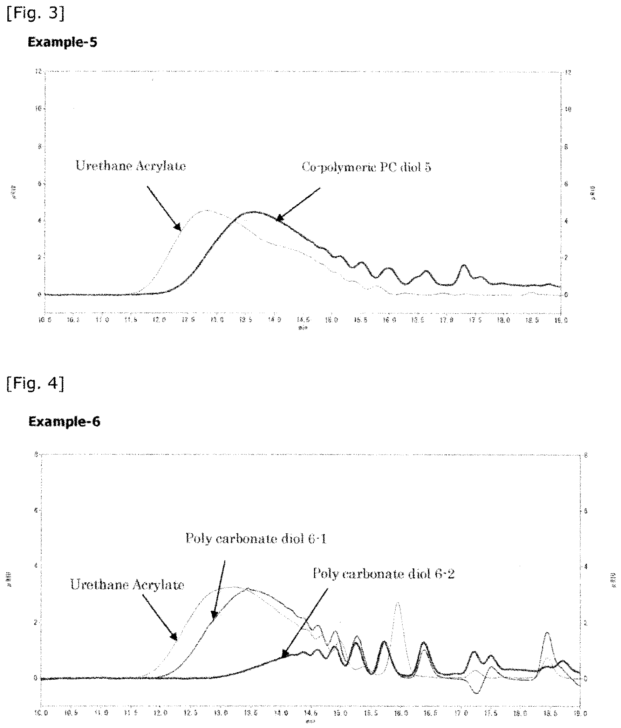

The intermediate/final resin was subjected to the GPC measurement for two times, as the same as Example 2 above. The resulted GPC chart is shown in Fig. 3. This example used one co-polymeric PC diol. The curve labeled with "Co-polymeric PC diol 5" has right-shifted broad peak compared to the former "Urethane Acrylate" curve. The result certainly confirms the increase of molecular weight and significant chain extension.

### Example 6: Preparation of Aliphatic Polycarbonate Urethane Acrylate (not according to the invention)

33.0 grams of isophorone diisocyanate, 0.1 gram of 4-methoxyphenol, 0.1 gram of dibutyltin dilaurate were charged into a 1000 mL reactor. 16.0 grams of 2-hydroxyethyl acrylate (Mn: 116) was added drop wise with dry air sparge and reacted for 2 hours at 50 to 60°C. It was then heated to 75°C and 35.0 grams of polycarbonate diol (PC6-1: polyhexanediol carbonate; Mn: 1000; OH value: 110±10 KOH mg/g) were added in the mixture. After the completion of PC6-1 addition, and 17.0 grams of polycarbonate diol (c-PC6-2: polyhexanediol carbonate; Mn: 500; OH value: 224±20 KOH mg/g) were added in the mixture. The final resin was obtained as clear viscous material with viscosity of 25000 cps at 60°C.

The intermediate/final resin was subjected to the GPC measurement for three times, as the same as Example 2 above. The resulted GPC chart is shown in Fig. 4. The addition of the excess diisocyanate to the acrylate produced the curve labeled with "Urethane Acrylate", having the left most broad peak and some small peaks. The addition of "PC6-1" made the curve labeled with "Poly carbonate diol 6-1" which was shifted toward right direction on the time axis; the change means that molecular weight was increased by the reaction. Further small sharp peaks appeared and they would correspond to chain extensions. Then the addition of "c-PC6-2" produced the final polymer which correspond to the last curve labeled with "Co-polymeric PC diol 6-2" which was further shifted to heavy molecular weight. Comparing the curves, the increase in molecular weight in the GPC diagram shall confirm the co-reaction of all components with a significant chain extension.

### Comparative example 1

A conventional urethane acrylate polymer resin was prepared as a polyaddition compound made from a homopolycarbonate diol consisting of 1,6-hexanediol and dimethyl ester, and hydroxyethyl acrylate.

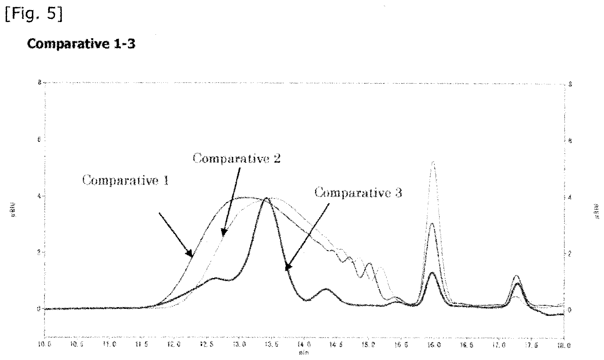

26.0 grams of isophorone diisocyanate, 0.1 gram of 4-methoxyphenol, 0.1 gram of dibutyltin dilaurate were charged into a 1000 mL reactor. 14.0 grams of 2-hydroxyethyl acrylate (Mn: 116) was added drop wise with dry air sparge and reacted for 2 hours at 50 to 60°C. It was then heated to 75°C and 60.0 grams of homopolycarbonate diol (polyhexanediol carbonate; Mn: 1000; OH value: 110±10 KOH mg/g) were added in the mixture and reacted for 2 hours at 90°C. The conventional final resin was subjected to the GPC measurement as the same as Example 2 above. The resulted GPC chart is shown in Fig. 5.

### Comparative example 2

A conventional polymer resin, containing no PC diol moiety, was prepared as a polyaddition compound made from a diethylene glycol, isophorone diisocyanate, and caprolactone acrylate.

36.0 grams of isophorone diisocyanate, 0.1 gram of 4-methoxyphenol, 0.1 gram of dibutyltin dilaurate were charged into a 1000 mL reactor. 56.0 grams of caprolactone-modified hydroxyhexyl acrylate (Mn: 344; OH value: 165±10 KOH mg/g) was added drop wise with dry air sparge and reacted for 2 hours at 50 to 60°C. It was then heated to 75°C and 9.0 grams of diethylene glycol (Molecular weight: 106.12) were added in the mixture and reacted for 2 hours at 90°C. The conventional final resin was subjected to the GPC measurement as the same as Example 2 above. The resulted GPC chart is shown in Fig. 5.

### Comparative example 3: Preparation of Conventional Aliphatic Polyether Urethane Acrylate

22.0 grams of isophorone diisocyanate, 0.1 gram of 4-methoxyphenol, 0.1 gram of dibutyltin dilaurate were charged into a 1000 mL reactor. 11.5 grams of 2-hydroxyethyl acrylate (Mn: 116) was added drop wise with dry air sparge and reacted for 2 hours at 50 to 60°C. It was then heated to 75°C and 6.0 grams of polyether polyol (PolyoxyPropyleneTrimethylolPropanether; Mn: 400) were added in the mixture. After the completion of polyol addition and 60.0 grams of polyether polyol (PolyoxyPropyleneGlycol; Mn: 4000) were added in the mixture. The final resin was obtained as clear viscous material with viscosity of 2500 cps at 60°C. The final resin was subjected to the GPC measurement as the same as Example 2 above. The resulted GPC chart is shown in Fig. 5. The curves in Fig. 5 illustrate that the comparative examples had similar Mw to the present polymers; but the comparative examples had different properties from the present polymers as shown below.

The following table illustrates a summary of components used in Examples 1 to 6.

**[Table 1]**

| | Isocyanate | Acrylate | Polyol(s) | |
|---|---|---|---|---|
| Example 1 | IPDI | C2 alkyl | PC diol 1-1 | Co-polymeric PC diol 1-2 |
| Example 2 | IPDI | C6+C2 alkyl ester | PC diol 2-1 | Co-polymeric PC diol 2-2 |
| Example 3 | IPDI | C4 alkyl | Co-polymeric PC diol 3 | |
| Example 4 | TDI | C6+C2 alkyl ester | Co-polymeric PC diol 4-1 | Co-polymeric PC diol 4-2 |
| Example 5 | MDI | C6+C2 alkyl ester | Co-polymeric PC diol 5 | |
| Example 6 | IPDI | C2 alkyl | PC diol 6-1 | PC diol 6-2 |

### Example 7: Polycarbonate Based Acrylate Oligomers in UV Radiation Curing

The prepared resins above were tested in UV radiation cure. The neat resins were blended With 3% liquid photo initiator (Irgacure 184, manufactured by BASF). The final blends were coated on 100 micron PET film #10 to #50 application wire rod. The coated substrates were then cured on a UV curing unit equipped With a 300 mJ/cm² Hg lamp at a speed of 15 mpm. The cured coatings were tested for elongation, tensile stress, pencil hardness tests. The elongation and tensile strength tests were according to JIS K 7161 and JIS K 7127. The pencil hardness test was according to JIS K5600-5-4. The results are shown in Table 2 below.

**[Table 2]**

| | Elongation [%] | Tensile Stress [psi] | Pencil Hardness |
|---|---|---|---|
| Example 1 | 196 | 3582 | HB |
| Example 2 | 346 | 4186 | F |
| Example 3 | 83 | 5285 | H |
| Example 4 | 273 | 2419 | F |
| Example 5 | 209 | 1926 | HB |
| Example 6 | 110 | 1500 | HB |
| comp. ex. 1 | 148 | 2475 | B |
| comp. ex. 2 | 81 | 3740 | HB |
| comp. ex. 3 | 141 | 966 | 3B |

| | | | |
|---|---|---|---|
| 1: Lot of Scratch 2: Little scratch 3: Almost no scratch 4: No scratch | | | |

### Example 8: Abrasion Resistance Test

The coated surface prepared by Example 7 was subjected to 20 double rubs with #0000 steel wool at constant load (500 grams) and velocity, after which the sample has been visually inspected for scratches in the coating and rated based on the condition of the scratches.

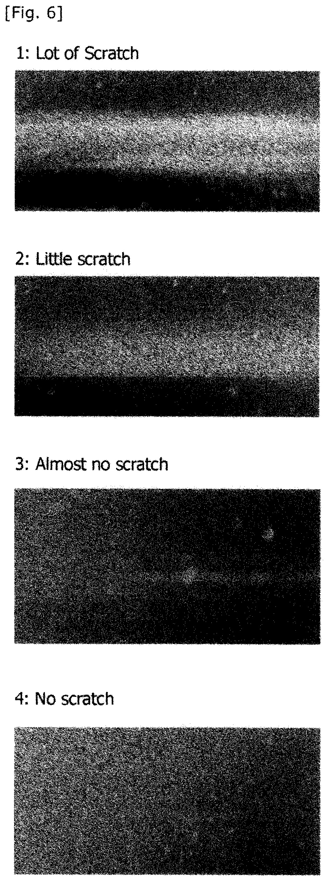

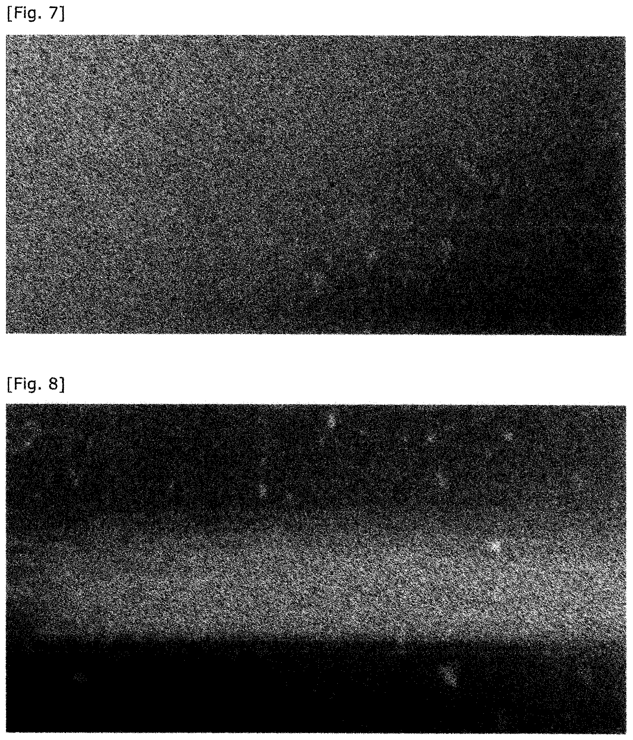

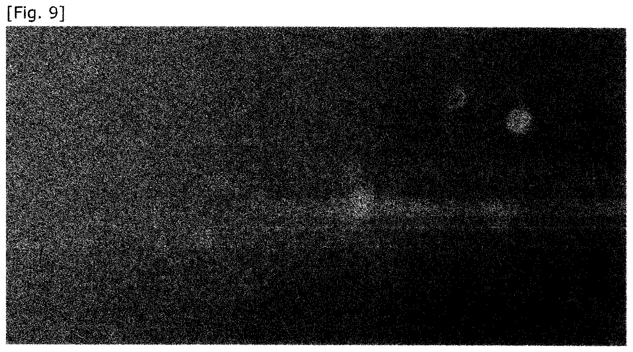

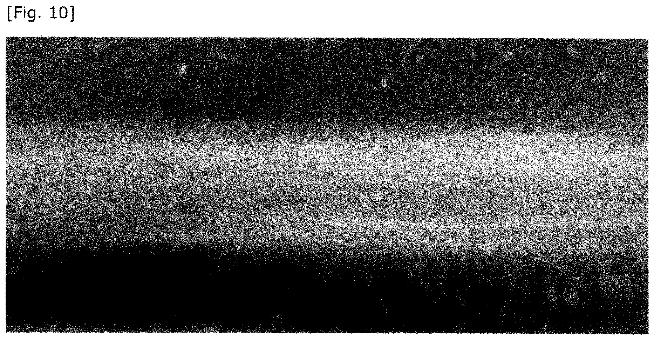

The results were evaluated in four levels, namely "Lot of Scratch", "Little Scratch", "Almost No Scratch", and "No Scratch". Fig. 6 shows all of the four levels to easily compare with each other. The results are also illustrated in the photographs as Figs. 7 to 10 that were taken from Example 2, Example 3, Example 5, and comparative example 1, respectively.

### Example 9: Self-healing Test

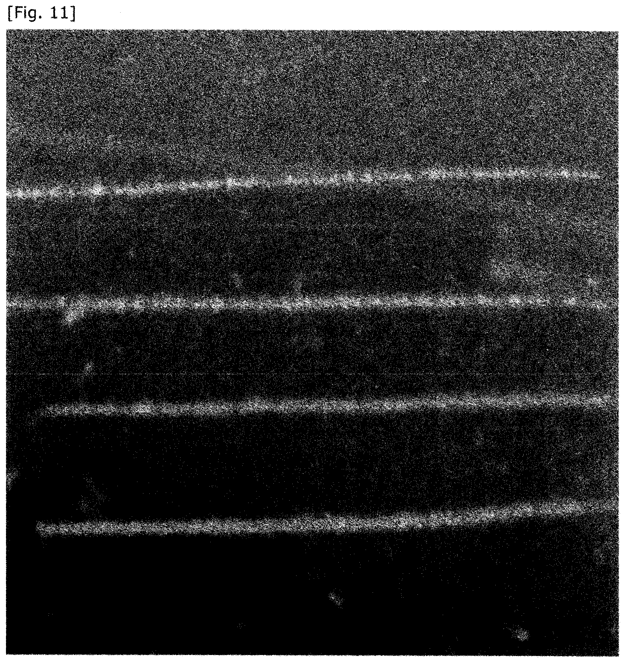

The coated surface prepared by Example 7 was subjected to 10 double rubs with copper brush, after which the sample has been visually inspected after 1 minute to check the restoration level of the scratches in the coating and rated based on the condition of the scratches restored. The initial condition of the scratched surface is shown in Fig. 11.

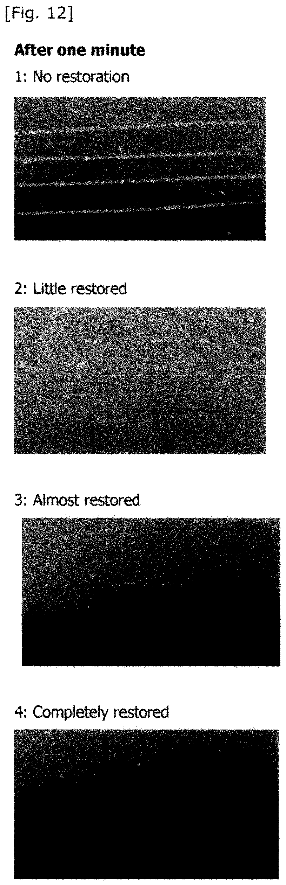

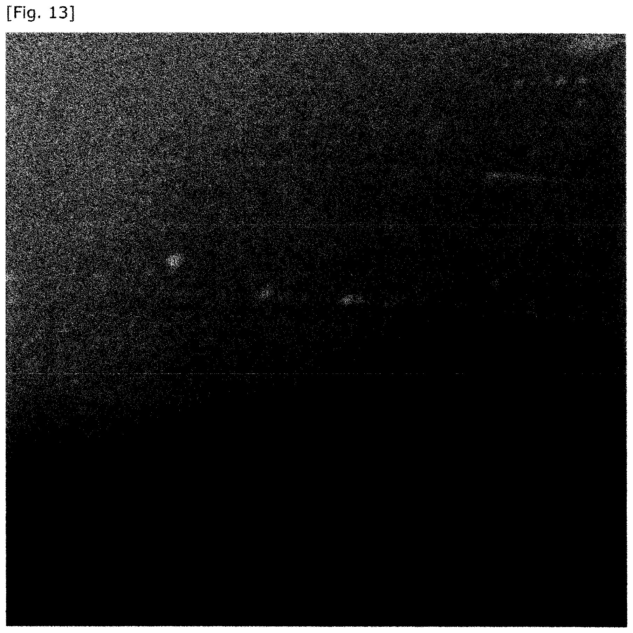

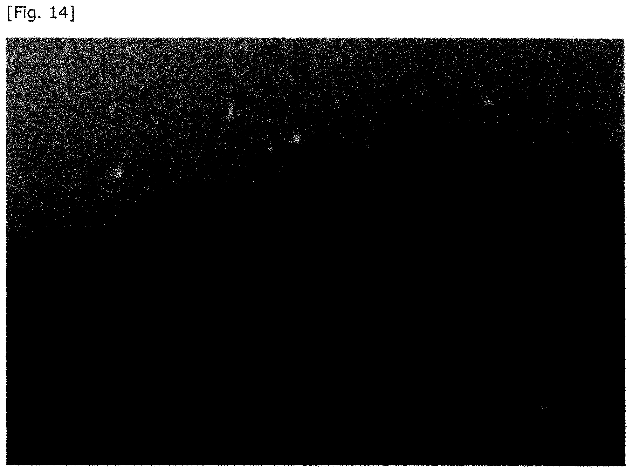

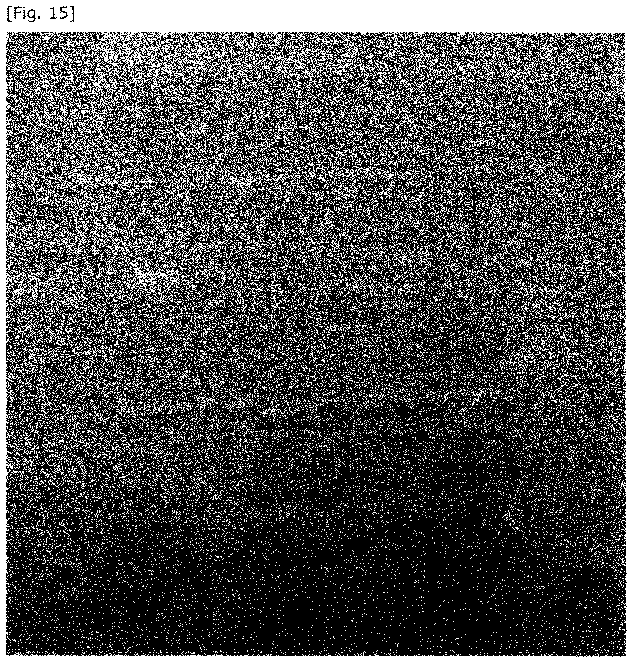

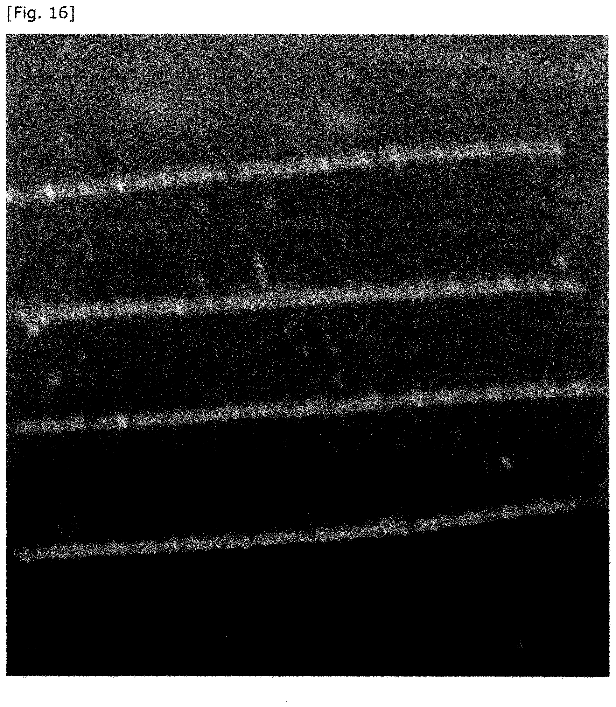

The results were evaluated in four levels, namely "No Restoration", "Little Restored", "Almost Restored", and "Completely Restored", based on the initial condition. Fig. 12 shows all of the four levels to easily compare with each other. The results are also illustrated in the photographs as Figs. 13 to 16 that were taken from Example 1, Example 4, Example 5, and comparative example 3, respectively.

The results of Examples 8 and 9 are summarized in Table 3 below.

**[Table 3]**

| | Abrasion Resistance | Self healing properties |
|---|---|---|
| Example 1 | 3 | 3 |
| Example 2 | 4 | 4 |
| Example 3 | 2 | 1 |
| Example 4 | 4 | 4 |
| Example 5 | 3 | 2 |
| Example 6 | 2 | 1 |
| comp. ex. 1 | 1 | 1 |
| comp. ex. 2 | 1 | 1 |
| comp. ex. 3 | 1 | 1 |

| | | |
|---|---|---|
| 1: No restoration 2: Little restored 3: Almost restored 4: Completely restored | | |

As shown in the above results, the present polymers are superior in elongation, tensile stress, and pencil hardness, and also have better abrasion resistance and self-healing properties. The properties are well balanced, and the present polymers are quite useful in the industries.

## Claims

1. A urethane-acrylated polymer comprising a reaction product of the ingredients including:
[i] a first co-polymeric polycarbonate polyol, preferably diol;
[ii] an organic polyisocyanate; and
[iii] a hydroxy-functional acrylate or methacrylate of general formula
(Acr)_{y}-(A)-OH
where Acr is an acrylate or methacrylate group, A is the residue of a polyol A(OH)_{y+1} with y being an integer ranging from 1 to 5, preferably A is selected from C₂ to C₁₈ alkyl and C₂ to C₁₈ alkyl that may be modified by at least one unit of a cyclic ester in particular caprolactone or A is C₂ to C₁₈ alkoxylated alkyl, with alkoxy being in C₂ to C₄, and preferably the acrylate or methacrylate having a functionality in acrylate or methacrylate groups ranging from 1 to 5,
[iv] a second co-polymeric polycarbonate polyol, preferably diol, different from the said first one according to i) and
wherein the said polycarbonate polyols are linked to the polyisocyanate via a urethane linkage, and
wherein the polyisocyanate is linked to the alkyl moiety of the hydroxyalkyl acrylate or hydroxyalkyl methacrylate via a urethane linkage.

2. The polymer according to claim 1, wherein said polycarbonate polyols according to i) and iv), are diols, and wherein said polymer comprises a product having formula (I):
(Acr)_{y}(A)(Q)(PC)[(Q)(PC)]ₓ(Q)(A)(Acr)_{y} (I)
wherein
(Acr)_{y}(A) is the residue of the said hydroxy-functional acrylate or methacrylate;
Q is the residue of the organic diisocyanate connected with A and PC via a urethane linkage;
x is an integer from 1 to 20;
PC is the residue of the said polycarbonate diols according to i) and iv), and with said PC representing accordingly co-polymeric structure.

3. The polymer according to claim 1 or 2, wherein the number average molecular weight Mn of the first or second polycarbonate polyol is 500 to 3,000, preferably 500 to 2,000, and more preferably 500 to 1,000.

4. The polymer according to any one of claims 1 to 3, wherein the said co-polymeric polycarbonate polyols include C₂ to C₈ alkylene diol moiety and/or C₆ to C₈ cycloalkylene diol moiety.

5. The polymer according to any one of claims 1 to 3, wherein the said co-polymeric polycarbonate polyols are derived from the co-polymerization of a polycarbonate diol with a cyclic ester, in particular with caprolactone.

6. The polymer according to any one of claims 1 to 5, wherein the said first and/or second polycarbonate polyol(s) is/are aliphatic.

7. The polymer according to any one of claims 1 to 5, wherein said the first and/or second polycarbonate polyol(s) is/are derived from ethoxylated bisphenol A, cyclic aliphatic alkylene diol, alkylene diol, or ring-opened diol of caprolactone.

8. The polymer according to any one of claims 1 to 7, wherein the said organic polyisocyanate is selected from aliphatic, cycloaliphatic or aromatic diisocyanates and particularly has 6 to 18 carbon atoms, preferably 6 to 12 carbon atoms.

9. The polymer according to claim 1, wherein the said hydroxy-functional acrylate or methacrylate according to iii) is selected from C₂ to C₁₈ alkyl modified by at least one unit of a cyclic ester in particular caprolactone.

10. A process for preparing a urethane acrylated polymer as defined in any one of claims 1 to 9, comprising the steps of:
a) reacting one of said hydroxy-functional acrylate or methacrylate according to iii) and the said first polycarbonate polyol according to i) with a molar excess of said isocyanate according to ii) by progressive addition of said acrylate or methacrylate according to iii) or the first polycarbonate polyol i) in said isocyanate ii), in the presence of an urethane reaction catalyst and of a polymerization inhibitor, to form an isocyanate adduct; and then
b) reacting the resultant isocyanate adduct of step a) with the other of iii) and i) by progressive addition of the other of iii) and i) into said adduct
to the resulting reactive mixture to obtain the said polymer,
wherein the progressive addition of the first polycarbonate polyol according to i) is followed by a successive step with said polycarbonate polyol according to iv) by progressive addition of iv),
and preferably, with both reaction steps a) and b) being in bulk and in the absence of any solvent.

11. A curable composition, wherein it comprises at least one polymer as defined according to any one of claims 1 to 9 or as obtained by a process as defined according to claim 10.

12. A composition according to claim 11, wherein the composition is selected from:
a radiation-curable composition, particularly UV, LED, EB, or laser curable composition,
a peroxide-curable composition,
a dual (radiation- and peroxide-) curable composition, or
in the case the said ingredient iii) is an hydroxyalkyl acrylate, a composition curable via Michael addition with polyamines.

13. A composition according to claims 11 or 12, wherein it is a coating composition, particularly selected from paints, inks, adhesives, gel coats or it is a molding composition or a composite material composition, or a composition for 3D articles to be subjected under successive layer coating and curing procedures.

14. Use of a polymer as defined according to any one of claims 1 to 9 or obtained by the process as defined according to claim 10 or of composition as defined in claims 11 or 12 in curable compositions, particularly selected from: coatings compositions, moldings compositions, composite materials compositions and compositions for 3D articles prepared by successive layer coating and curing procedures.

15. A cured product, wherein it is resulting from the curing of at least one polymer as defined in any one of claims 1 to 9 or from the curing of at least one composition as defined in any one of claims 11 to 13.

16. A product according to claim 15, wherein it is selected from: coatings, molded parts or articles, composite materials, or 3D articles prepared by successive layer coating and curing procedures.

17. An article, wherein it comprises the cured product according to claim 15, particularly a substrate coated by the said cured product.

## Patentansprüche

1. Urethan-acryliertes Polymer, umfassend ein Reaktionsprodukt der Bestandteile, welche einschließen:
[i] ein erstes copolymeres Polycarbonatpolyol, vorzugsweise Diol;
[ii] ein organisches Polyisocyanat; und
[iii] ein hydroxyfunktionelles Acrylat oder Methacrylat mit der allgemeinen Formel
(Acr)_{y}-(A)-OH
wobei Acr eine Acrylat- oder Methacrylatgruppe ist, A der Rest eines Polyols A(OH)_{y+1} ist, wobei y eine ganze Zahl im Bereich von 1 bis 5 ist, vorzugsweise A ausgewählt ist aus C₂- bis C₁₈-Alkyl und C₂- bis C₁₈-Alkyl, das durch mindestens eine Einheit eines cyclischen Esters, insbesondere Caprolacton, modifiziert sein kann, oder A C₂- bis C₁₈-alkoxyliertes Alkyl ist, wobei Alkoxy C₂ bis C₄ ist, und wobei das Acrylat oder Methacrylat vorzugsweise eine Funktionalität an Acrylat- oder Methacrylatgruppen im Bereich von 1 bis 5 hat,
[iv] ein zweites copolymeres Polycarbonatpolyol, vorzugsweise Diol, das sich von dem ersten gemäß i) unterscheidet, und
wobei die Polycarbonatpolyole mit dem Polyisocyanat über eine Urethanverknüpfung verknüpft sind, und
wobei das Polyisocyanat über eine Urethanverknüpfung mit dem Alkylanteil des Hydroxyalkylacrylats oder Hydroxyalkylmethacrylats verknüpft ist.

2. Polymer nach Anspruch 1, wobei die Polycarbonatpolyole gemäß i) und iv) Diole sind, und wobei das Polymer ein Produkt mit der Formel (I) umfasst:
(Acr)_{y}(A)(Q)(PC)[(Q)(PC)]ₓ(Q)(A)(Acr)_{y} (I)
wobei
(Acr)_{y}(A) der Rest eines hydroxyfunktionellen Acrylats oder Methacrylats ist;
Q der Rest des organischen Diisocyanats ist, der mit A und PC über eine Urethanverknüpfung verbunden ist;
x eine ganze Zahl von 1 bis 20 ist;
PC der Rest der Polycarbonatdiole gemäß i) und iv) ist, und wobei das PC entsprechend copolymere Struktur repräsentiert.

3. Polymer nach Anspruch 1 oder 2, wobei das durchschnittliche Molekulargewicht (Zahlenmittel) (Mn) des ersten oder zweiten Polycarbonatpolyols 500 bis 3000, vorzugsweise 500 bis 2000 und bevorzugter 500 bis 1000 ist.

4. Polymer nach einem der Ansprüche 1 bis 3, wobei die copolymeren Polycarbonatpolyole C₂- bis C₈-Alkylen-diolanteil und/oder C₆- bis C₈-Cycloalkylendiolanteil einschließen.

5. Polymer nach einem der Ansprüche 1 bis 3, wobei die copolymeren Polycarbonatpolyole von der Copolymerisation eines Polycarbonatdiols mit einem cyclischen Ester abgeleitet sind, insbesondere mit Caprolacton.

6. Polymer nach einem der Ansprüche 1 bis 5, wobei das erste und/oder zweite Polycarboatpolyol(e) aliphatisch ist bzw. sind.

7. Polymer nach einem der Ansprüche 1 bis 5, wobei das erste und/oder zweite Polycarbonatpolyol(e) von ethoxyliertem Bisphenol A, cyclischem aliphatischem Alkylendiol, Alkylendiol oder ringgeöffnetem Diol von Caprolacton abgeleitet ist bzw. sind.

8. Polymer nach einem der Ansprüche 1 bis 7, wobei das organische Polyisocyanat ausgewählt ist aus aliphatischen, cycloaliphatischen oder aromatischen Diisocyanaten und insbesondere 6 bis 18 Kohlenstoffatome, vorzugsweise 6 bis 12 Kohlenstoffatome aufweist.

9. Polymer nach Anspruch 1, wobei das hydroxyfunktionelle Acrylat oder Methacrylat gemäß iii) ausgewählt ist aus C2- bis C18-Alkyl, modifiziert durch mindestens eine Einheit eines cyclischen Esters, insbesondere Caprolacton.

10. Verfahren zur Herstellung eines Urethan-acrylierten Polymers wie in einem der Ansprüche 1 bis 9 definiert, das die Schritte umfasst:
a) Umsetzen von einem von dem hydroxyfunktionellen Acrylat oder Methacrylat gemäß iii) und dem ersten Polycarbonatpolyol gemäß i) mit einem molaren Überschuss des Isocyanats gemäß ii) durch progressive Zugabe des Acrylats oder Methacrylats gemäß iii) oder des ersten Polycarbonatpolyols i) in dem Isocyanat ii) in Gegenwart eines Urethanreaktionskatalysators und eines Polymerisationsinhibitors, um ein Isocyanataddukt zu bilden; und dann
b) Umsetzen des resultierenden Isocyanataddukts aus Schritt a) mit dem anderen von iii) und i) durch progressive Zugabe des anderen von iii) und i) in das Addukt zu der resultierenden reaktiven Mischung, um das Polymer zu erhalten,
wobei der progressiven Zugabe des ersten Polycarbonatpolyols gemäß i) ein nachfolgender Schritt mit dem Polycarbonatpolyol gemäß iv) durch progressive Zugabe von iv) folgt,
und wobei vorzugsweise beide Reaktionsschritte a) und b) in Masse und in Abwesenheit von jeglichem Lösungsmittel erfolgen.

11. Härtbare Zusammensetzung, die mindestens ein Polymer, wie in einem der Ansprüche 1 bis 9 definiert, oder wie in einem Verfahren, wie in Anspruch 10 definiert, erhalten umfasst.

12. Zusammensetzung nach Anspruch 11, wobei die Zusammensetzung ausgewählt ist aus
einer strahlungshärtbaren Zusammensetzung, insbesondere UV-, LED-, Elektronenstrahl (EB)- oder Laser-härtbaren Zusammensetzung,
einer Peroxid-härtbaren Zusammensetzung,
einer dualhärtbaren (mit Strahlung und Peroxid) Zusammensetzung oder
falls der Bestandteil iii) ein Hydroxyalkylacrylat ist, einer über Michael-Addition mit Polyaminen härtbaren Zusammensetzung.

13. Zusammensetzung nach den Ansprüchen 11 oder 12, die eine Beschichtungszusammensetzung, insbesondere ausgewählt aus Anstrichen, Tinten, Klebstoffen, Gelcoats, oder eine Formungszusammensetzung oder eine Verbundmaterialzusammensetzung, oder eine Zusammensetzung für 3D-Artikel ist, die in aufeinander folgenden Schichten Beschichtungs- und Härtungsprozeduren unterzogen werden sollen.

14. Verwendung eines Polymer, wie gemäß einem der Ansprüche 1 bis 9 definiert, oder nach dem Verfahren, wie in Anspruch 10 definiert, erhalten oder von Zusammensetzung, wie in den Ansprüchen 11 oder 12 definiert, in härtbaren Zusammensetzungen, insbesondere ausgewählt aus: Beschichtungszusammensetzungen, Formungszusammensetzungen, Verbundmaterialzusammensetzungen und Zusammensetzungen für 3D-Artikel, die durch in aufeinander folgenden Schichten erfolgende Beschichtungs- und Härtungsprozeduren hergestellt werden.

15. Gehärtetes Produkt, das aus dem Härten von mindestens einem Polymer, wie in einem der Ansprüche 1 bis 9 definiert, oder aus dem Härten von mindestens einer Zusammensetzung, wie in einem der Ansprüche 11 bis 13 definiert, resultiert.

16. Produkt gemäß Anspruch 15, das ausgewählt ist aus: Beschichtungen, Formteilen oder -artikeln, Verbundmaterialien oder 3D-Artikeln, die durch in aufeinander folgenden Schichten erfolgende Beschichtungs- und Härtungsprozeduren hergestellt werden.

17. Artikel, der das gehärtete Produkt nach Anspruch 15 umfasst, insbesondere ein Substrat, welches durch das gehärtete Produkt beschichtet ist.

## Revendications

1. Polymère d'uréthane acrylé comprenant un produit de réaction des ingrédients incluant :
[i] un premier polycarbonate-polyol, de préférence -diol, copolymère ;
[ii] un polyisocyanate organique ; et
[iii] un acrylate ou méthacrylate hydroxyfonctionnel de formule générale
(Acr) _{y}-(A)-OH
où Acr est un groupe acrylate ou méthacrylate, A est le résidu d'un polyol A(OH)_{y+1} avec y étant un entier allant de 1 à 5, de préférence A est choisi parmi les radicaux alkyle en C2 à C18 et alkyle en C2 à C18 qui peuvent être modifiés par au moins un motif d'un ester cyclique, en particulier de caprolactone, ou A est un alkyle en C2 à C18 alcoxylé, avec l'alcoxy étant en C2 à C4, et de préférence l'acrylate ou méthacrylate ayant une fonctionnalité en groupes acrylate ou méthacrylate allant de 1 à 5 ;
[iv] un deuxième polycarbonate-polyol, de préférence -diol, copolymère, différent dudit premier selon i) et
dans lequel lesdits polycarbonate-polyols sont liés au polyisocyanate par le biais d'une liaison uréthane, et
dans lequel le polyisocyanate est lié au groupement alkyle de l'acrylate d'hydroxyalkyle ou méthacrylate d'hydroxyalkyle par le biais d'une liaison uréthane.

2. Polymère selon la revendication 1, dans lequel lesdits polycarbonate-polyols selon i) et iv) sont des diols, et dans lequel ledit polymère comprend un produit ayant la formule (I) :
(Acr)_{y}(A)(Q)(PC)[(Q)(PC)]ₓ(Q)(A)(Acr)_{y} (I)
dans laquelle
(Acr)_{y}(A) est le résidu dudit acrylate ou méthacrylate hydroxyfonctionnel ;
Q est le résidu du diisocyanate organique lié à A et PC par le biais d'une liaison uréthane ;
x est un entier de 1 à 20 ;
PC est le résidu desdits polycarbonate-diols selon i) et iv), et avec ledit PC représentant en conséquence une structure copolymère.

3. Polymère selon la revendication 1 ou 2, dans lequel le poids moléculaire moyen en nombre Mn du premier ou deuxième polycarbonate-polyol est de 500 à 3000, de préférence 500 à 2000, et mieux encore 500 à 1000.

4. Polymère selon l'une quelconque des revendications 1 à 3, dans lequel lesdits polycarbonate-polyols copolymères comportent un groupement alkylènediol en C2 à C8 et/ou un groupement cycloalkylènediol en C6 à C8.

5. Polymère selon l'une quelconque des revendications 1 à 3, dans lequel lesdits polycarbonate-polyols copolymères sont dérivés de la copolymérisation d'un polycarbonate-diol avec un ester cyclique, en particulier avec la caprolactone.

6. Polymère selon l'une quelconque des revendications 1 à 5, dans lequel le(s)dit(s) premier et/ou deuxième polycarbonate-polyol(s) est/sont aliphatique(s).

7. Polymère selon l'une quelconque des revendications 1 à 5, dans lequel le(s)dit(s) premier et/ou deuxième polycarbonate-polyol(s) est/sont dérivé(s) du bisphénol A éthoxylé, d'un alkylènediol cycloaliphatique, d'un alkylènediol, ou d'un diol à cycle ouvert de caprolactone.

8. Polymère selon l'une quelconque des revendications 1 à 7, dans lequel ledit polyisocyanate organique est choisi parmi les diisocyanates aliphatiques, cycloaliphatiques ou aromatiques et en particulier a 6 à 18 atomes de carbone, de préférence 6 à 12 atomes de carbone.

9. Polymère selon la revendication 1, dans lequel ledit acrylate ou méthacrylate hydroxyfonctionnel selon iii) est choisi parmi les radicaux alkyle en C2 à C18 modifiés par au moins un motif d'un ester cyclique, en particulier de caprolactone.

10. Procédé destiné à préparer un polymère d'uréthane acrylé tel que défini dans l'une quelconque des revendications 1 à 9, comprenant les étapes de :
a) réaction de l'un dudit acrylate ou méthacrylate hydroxyfonctionnel selon iii) et dudit premier polycarbonate-polyol selon i) avec un excès molaire dudit isocyanate selon ii) par ajout progressif dudit acrylate ou méthacrylate selon iii) ou du premier polycarbonate-polyol i) dans ledit isocyanate ii), en présence d'un catalyseur de réaction d'uréthane et d'un inhibiteur de polymérisation, pour former un adduit d'isocyanate ; et ensuite
b) réaction de l'adduit d'isocyanate résultant de l'étape a) avec l'autre de iii) et i) par ajout progressif de l'autre de iii) et i) dans ledit adduit au mélange réactif résultant pour obtenir ledit polymère,
dans lequel l'ajout progressif du premier polycarbonate-polyol selon i) est suivi d'une étape successive avec ledit polycarbonate-polyol selon iv) par ajout progressif de iv),
et de préférence, avec les deux étapes réactionnelles a) et b) se faisant dans la masse et en l'absence de tout solvant.

11. Composition durcissable, qui comprend au moins un polymère tel que défini selon l'une quelconque des revendications 1 à 9 ou tel qu'obtenu par un procédé tel que défini selon la revendication 10.

12. Composition selon la revendication 11, la composition étant choisie parmi :
une composition durcissable par rayonnement, en particulier une composition durcissable par UV, LED, EB, ou laser,
une composition durcissable par peroxyde,
une composition durcissable à la fois par rayonnement et peroxyde, ou
dans le cas où ledit ingrédient iii) est un acrylate d'hydroxyalkyle, une composition durcissable par addition de Michael avec des polyamines.

13. Composition selon la revendication 11 ou 12, qui est une composition de revêtement, en particulier choisie parmi les peintures, les encres, les adhésifs, les enduits gélifiés, ou qui est une composition de moulage ou une composition de matériau composite, ou une composition pour articles 3D devant être soumise à des procédures successives de dépôt de couche et de durcissement.

14. Utilisation d'un polymère tel que défini selon l'une quelconque des revendications 1 à 9 ou obtenu par le procédé tel que défini selon la revendication 10 ou d'une composition telle que définie dans la revendication 11 ou 12 dans des compositions durcissables, en particulier choisies parmi : les compositions de revêtements, les compositions de moulages, les compositions de matériaux composites et les compositions pour articles 3D préparés par des procédures successives de dépôt de couche et de durcissement.

15. Produit durci, qui résulte du durcissement d'au moins un polymère tel que défini dans l'une quelconque des revendications 1 à 9 ou du durcissement d'au moins une composition telle que définie dans l'une quelconque des revendications 11 à 13.

16. Produit selon la revendication 15, qui est choisi parmi : les revêtements, les pièces ou articles moulés, les matériaux composites, ou les articles 3D préparés par des procédures successives de dépôt de couche et de durcissement.

17. Article, qui comprend le produit durci selon la revendication 15, en particulier un substrat revêtu par ledit produit durci.
